# EUROPEAN PATENT SPECIFICATION

(11) **EP 2 169 243 B1**
(45) Date of publication and mention of the grant of the patent: **25.07.2012**
(21) Application number: 09171725.6
(22) Date of filing: 30.09.2009
(51) Int. Cl.: F16C 33/20

(54) **Plain bearing unit**
Gleitlagereinheit
Ensemble palier lisse

(30) Priority: 30.09.2008 JP 2008252135
(43) Date of publication of application: 31.03.2010
(73) Proprietor: Hitachi Ltd., Tokyo 100-8280 (JP)
(72) Inventor: ONO, Masahiko, Tokyo 100-8220 (JP)
(74) Representative: MERH-IP Matias Erny Reichl Hoffmann

(56) References cited:
- JP-A- 11 279 413
- JP-A- 2008 082 356
- US-A- 3 281 115

## Description

### BACKGROUND OF THE INVENTION

### 1. Field of the Invention

The present invention relates generally to rotating and/or swinging and/or reciprocating bearing unit and more particularly to a bearing unit composed of a resin-made member and a metal member contacting therewith.

### 2. Description of the Related Art

A resin material used as a sliding member is generally lightweight and superior in moldability, self-lubricating ability, etc; therefore, it is used under circumstances where oil or lubricant such as grease or the like cannot be used. A single or raw resin material has problems with load bearing and wear resistance. Therefore, glass fiber or carbon fiber is added to reinforce the resin material and solid lubricant such as graphite, polytetrafluoroethylene (PTFE), molybdenum disulfide or the like is added to increase wear resistance. It is known that such additions provide low friction and low wear compared with non-addition. In recent years, bearings have increasingly been needed and in particular a bearing structure superior in low-friction and wear resistance has been required.

Sliding members for dry gas described in JP-11-279413-A and JP-4-93397-A are proposed as sliding members used in dry gas circumstances which are circumstances where lubricant cannot be used.

The sliding member described in JP-11-279413-A is made by mixing a thermoset resin with carbon fiber and graphite powder and hot-press molding it.

The sliding member described in JP-4-93397-A is made of a mixture of a carbon material such as coke, graphite, carbon black or the like and an organic binder such as coal tar pitch, a thermoset resin or the like. In addition, the sliding member is provided at least close to the sliding surface thereof with a layer embedded with a large number of short circular hard materials made of silicon carbide fiber.

JP 2008 082356 A discloses a static pressure gas bearing comprising a bearing member made of thermoplastics containing at least one of glass fiber, carbon fiber, or the like.

### SUMMARY OF THE INVENTION

However, although the methods described in JP-11-279413-A and JP-4-93397-A use a thermoset resin for the sliding member and their bearings are superior in heat resistance, the methods entail a long time molding process and difficulty in recycling.

Accordingly, it is an object of the present invention to provide a plain bearing unit in which a sliding member made of thermoplastics having high recyclability and not containing solid lubricant provides a low frictional coefficient and improves wear resistance even under circumstances where oil or grease cannot be used.

This object is achieved by the subject-matter according to the independent claim 1. The dependent claims refer to preferred embodiments of the invention.

A plain bearing unit of the present invention includes a bearing portion made of a resin material containing glass and/or a carbon material; a shaft supported by the bearing portion; and a dry gas portion adapted to supply dry gas to a bearing sliding portion where the bearing portion and the shaft slide with each other.

The plain bearing unit of the present invention may have any one of rotating, swinging and reciprocating relationships between a bearing and a shaft. The formation of the bearing portion may be a cylindrical end face type, a block-on-ring type, a pin-disk type, a journal type, or a reciprocating type, or a partial bearing thereof or a complex bearing combining them.

The resin material of the bearing portion has at least one type of thermoplastics. Examples of the thermoplastics include polyamide, polyphthalamide, polyamide-imide, polyacetal, polyphenylene sulfide, polyetherimide, ultrahigh molecular weight polyethylene, and polyether ether ketone. To reinforce the thermoplastics, single or combined fibrous, spherical, or scale-like glass or carbon is added thereto.

The bearing may be provided with a through-hole passed through from its outer circumferential surface to a bearing surface and dry gas subjected to dust removal may be supplied via the through-hole to the bearing sliding portion.

The dry gas supplied to the bearing sliding portion may be gas containing oxygen. An example of such gas is dry air having a temperature of -50°C or less in terms of dew point.

The dry gas supplied to the bearing sliding portion may be gas not containing oxygen. Examples of such gas include inert gas such as nitrogen, argon or the like, and hydrogen gas and hydrocarbon gas.

The present invention can suppresses the growth of wear powder of the resin bearing and accelerates the transfer of the wear powder onto the surface of a counterpart. Thus, the friction and wear of the resin bearing can be reduced to reduce drive energy to various devices. In addition, since oil or solid lubricant is not used, the consumption of resources is suppressed to reduce an environment load.

### BRIEF DESCRIPTION OF THE DRAWINGS

Fig. 1 illustrates an essential portion of a centrifugal compressor according to a sixth embodiment of the present invention.
Fig. 2 illustrates a journal type testing machine according to a first embodiment of the present invention.
Fig. 3 illustrates a structure of a bearing portion according to a third embodiment of the present invention.
Fig. 4 illustrates a block-on-ring type testing machine according to a fourth embodiment of the present invention.
Fig. 5 illustrates a bearing portion of a centrifugal compressor according to the sixth embodiment of the present invention.
Fig. 6 illustrates an essential portion of a centrifugal compressor according to a seventh embodiment of the present invention.

### DESCRIPTION OF THE PREFERRED EMBODIMENTS

Embodiments of the present invention will hereinafter be described with reference to the accompanying drawings. It is to be noted that the present invention is not limited to the embodiments.

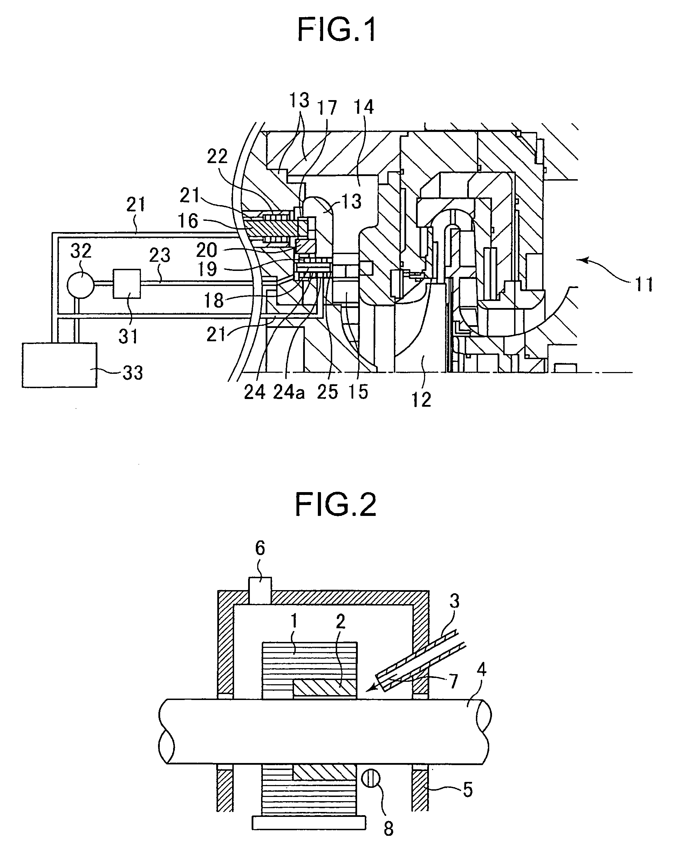

A plain bearing unit as a basic configuration of the present invention will first be described using Fig. 2. Fig.2 illustrates a testing portion of a journal type testing machine.

### [Experimental Example 1 (first embodiment)]

The testing portion of the testing machine is configured such that a resin bearing 2 is press fitted into a casing 1 to rotatably carry a shaft 4. The casing 1 is configured to apply a load to the resin bearing 2. A rotating-driving motor (not illustrated) is connected to one end of the shaft 4.

The testing portion is covered by a protection cover 5, which is provided with a venting hole 6 at an upper portion as well as with venting holes in the vicinity of the shaft. The resin bearing 2 is made of thermoplastics, polyphenylene sulfide (PPS), containing 30 wt% carbon fiber. The shaft 4 is made of stainless steel (SUS).

The protection cover 5 is provided with a gas supply tube 3 passed therethrough. A gas flow 7 discharged from the gas supply tube 3 is illustrated. The gas flow 7 moves from the gas supply tube 3 toward a bearing sliding portion between the resin bearing 2 and the shaft 4. In this case, nitrogen as dry gas was supplied at 20 L/min and relative humidity in the vicinity of the resin bearing 2 was 1.5%, which is a lower limit of a humidity sensor 8 installed in the protection cover 5.

As a result, a minimum friction coefficient is 0.08, which significantly drops from 0.25 in damp air. Also wear-depth reduces by about 40% compared in damp air. The wear powder of the resin bearing uniformly transfers onto the SUS shaft as a counterpart.

### [Experimental Example 2 (second embodiment)]

A description is given of, as a similar experiment, an example where the resin bearing uses polyether ether ketone (PEEK) containing 30 wt% glass fiber. The others are the same as those of the above-mentioned test.

The results of the test are as below. Also in this test, the minimum friction coefficient is 0.09, which significantly reduces from 0.3 in dump air. In addition, also wear-depth reduces by about 40%. The wear powder of the resin bearing uniformly transfers onto the SUS shaft as a counterpart.

### [Experimental Example 3 (third embodiment)]

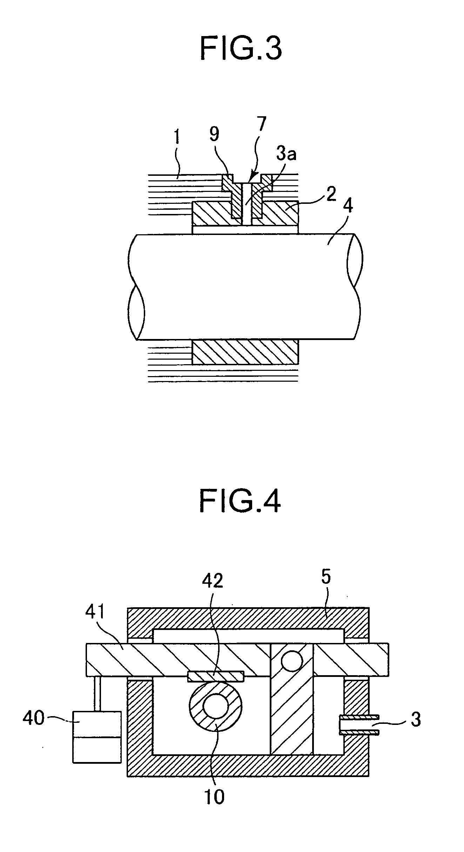

A description is given of another gas supply portion adapted to supply gas to a bearing with reference to Fig. 3. As illustrated in Fig. 3, this gas supply portion has a hole 3a which is located on an opposite-load surface of a shaft 4 so as to communicate from a casing 1 to the shaft 4. In addition, a piping component 9 is secured to the casing 1 and a resin bearing 2 so that the hole 3a is shared thereby. The others are similar to those of experimental example 1. In this way, the piping component 9 serves as a lock for the resin bearing 2. Even if the resin bearing 2 shrinks due to changes in ambient temperature, it is possible to prevent the resin bearing 2 from dropping off from the casing 1 and from being turned together with the shaft 4.

### [Experimental Example 4 (forth embodiment)]

A test performed for a block-on-ring type is next described with reference to Fig. 4. A planar type resin test piece 42 of polyether ether ketone (PEEK) containing 30 wt% carbon fiber is examined which is a resin material used as a bearing portion. This test piece 42 is interposed between a cantilever 41 attached with a weight 40 and a shaft 10 made of stainless steel (SUS). The shaft 10 performs a swing movement of 90 degrees. A testing portion is circumferentially covered by a protection cover 5, which is provided with an air supply pipe 3.

In this case, dry air as dry gas was supplied at 20 L/min. The results of the test are as below. The minimum friction coefficient is 0.15, which reduces by about half compared in damp air. In addition, also wear-depth reduces by about 40%. The wear powder of the resin bearing uniformly transferred onto the swing portion of the SUS shaft.

### [Experimental example 5 (fifth embodiment)]

In the present experimental example, the device of experimental example 4 is used and gas resulting from gasifying liquid nitrogen is supplied in place of dry air to the inside of the protection cover 5 from the air supply pipe 3. The supply amount of the gas is controlled so that the temperature inside the protection cover 5 may become - 100°C. The other conditions are the same as in the above tests.

The results of this test are as below. The minimum friction coefficient is 0.05. In addition, the wear powder of the resin bearing transferring onto the SUS shaft is most.

Referring to Fig. 1, a description will next be given of an example (a sixth embodiment) in which a plain bearing unit of the present invention is applied to a centrifugal compressor. In the centrifugal compressor 11 of this embodiment, a drive device (not illustrated) rotates an impeller 12 mounted to a main shaft (not illustrated) with the main shaft to compress air passed through a passage 14 provided in a casing 13 and supplied to the impeller 12. The compressed air is passed through a discharge port (not illustrated) and discharged to the outside. Incidentally, although not illustrated in Fig. 1, the main shaft rotating the impeller 12 is provided below the impeller 12 in Fig. 1.

The centrifugal compressor 11 is provided with a plurality of vanes 15 to control a flow rate of gas in a passage adapted to lead the gas to the impeller 12.

The vanes 15 are swung by a gear mechanism that includes a first gear 17, a third gear 19 and a second gear 20. The first gear 17 is a drive gear secured to a drive shaft 16 connected to a drive mechanism (not illustrated). The third gear 19 is a vane gear secured to a vane shaft 18 connected to the vanes 15. The second gear 20 is a ring gear interposed between the first and third gears to transmit rotation of the first gear to the third gear.

The first, third and second gears 17, 19, 20 are housed in the casing 13. The first and third gears 17 and 19 are mounted to the drive shaft 16 and the vane shaft 18, respectively. The drive shaft 16 and the vane shaft 18 are rotatably supported by bearings (plain bearings) 22 and 24, respectively, secured inside the casing 13. In addition, the bearings 22 and 24 are made of polyphenylene sulfide (PPS) containing carbon fiber.

The vane shaft 18 is provided with a seal 25 on the side of the passage 14 to prevent the inflow of gas from the inside of the passage 14. Although a contact seal as the seal 25 is used in the present embodiment, a non-contact labyrinth seal may be used.

A gas supply portions 21 are connected to the respective bearings 22 and 24. Nitrogen with a dew point not higher than -50°C is supplied to the bearings 22 and 24 through the gas supply portions 21 from a gas supply device 33 at a pressure of 0.02 MPa. The nitrogen is recovered through a communication hole 23 communicating with the outside and a check valve (not illustrated) of the out side into the gas supply device 33 including a cylinder and dehumidification is carried out in the gas supply device 33. The communication hole 23 is provided at a portion of the casing 13 incorporating the gear mechanism.

High pressure air or inert gas such as argon subjected to dehumidification and dust removal may be supplied in place of nitrogen. In addition, a gas production device may be used in place of the cylinder. The nitrogen recovered is returned to the gas supply device 33 via a dust removal device 31 and a pump 32, and circulated and supplied to the bearings 22 and 24.

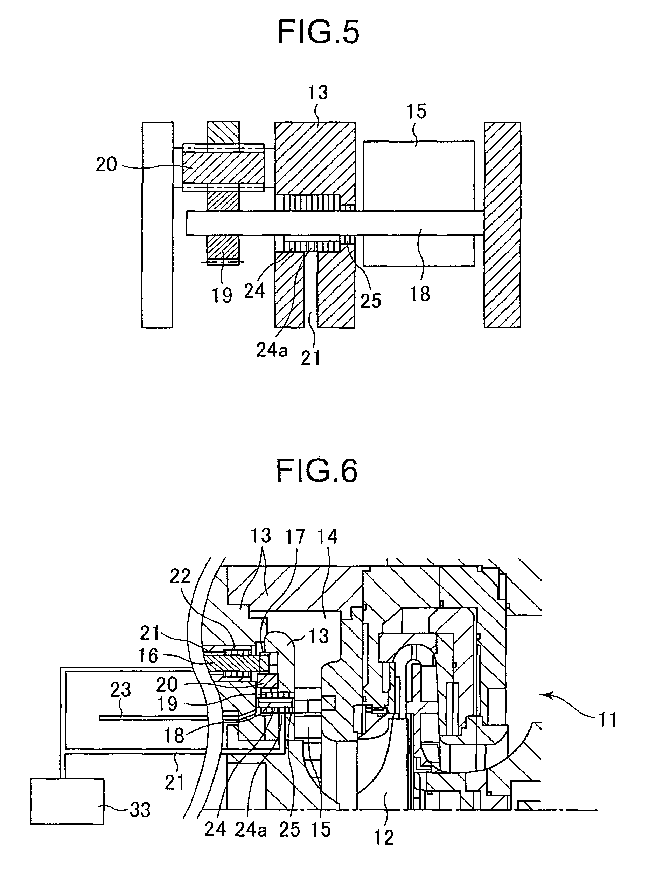

Referring to Fig. 5 which is an enlarged view illustrating a bearing portion, the bearing 24 has a communicating hole 24a, which communicates from a bearing surface sliding along the vane shaft 18 to a gas supply hole (a part of the gas supply portion 21) on an outer circumferential surface side. Nitrogen is supplied to a sliding portion of the bearing 24 through the communicating hole 24a. Also, Nitrogen flows along the drive shaft 16, and flows into a space between the drive shaft 16 and the bearing 22 from the end of the bearing 22, and is supplied to a sliding portion of the bearing 22.

In this way, the centrifugal compressor performs predetermined operation while nitrogen are circulated and supplied to the bearings. The temperature of gas flowing in the passage 14 largely ranges from -160°C to 60°C depending on the type of gas. Under various temperature conditions, without using grease or solid lubricant, the torque of the drive shaft 16 can be reduced compared with the case where dry air is not allowed to flow.

In the sixth embodiment, nitrogen gas is supplied to the bearing portions from the cylinder and thereafter is recovered, circulated and supplied thereto. In a seventh embodiment as illustrated in Fig. 6, an excess of supply gas is not recovered but is discharged to the air through a filter (not illustrated) from the communication hole 23 and the check valve. In this case, high-pressure air or the like subjected to dehumidification and dust removal may be used in place of nitrogen so that the torque of the drive shaft 16 can be reduced. As described above, it is effective that the gas supplied to the bearings is subjected to dehumidification as well as to dust removal.

As a relative example, the same test as that in experimental example 1 or 4 was performed using polyether ether ketone (PEEK) not containing fiber or the like. The results showed the same friction coefficient and wear-depth as those in damp air also in the case where nitrogen was supplied as dry gas.

As described above, in the case where the bearing made of resin containing carbon fiber or glass having property similar to carbon fiber is used, the conditions of the sliding portion is controlled. Thus, the resin sliding portion in which it is not necessary to supply oil, grease, solid lubricant, etc. thereto can be obtained.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A plain bearing unit comprising:
a bearing portion (2) made of thermoplastics containing glass fiber and/or a carbon fiber and not containing a solid lubricant;
a shaft (4) supported with the bearing portion; and
a gas supply portion (3) supplying dry gas to a bearing sliding portion where the bearing portion (2) slides with the shaft (4) and a wear powder of the bearing portion (2) uniformly transfers onto the shaft (4) as a counterpart.

2. The plain bearing unit according to claim 1, wherein the bearing portion (2) has a through-hole (3a) passed through from an outer circumferential surface to a bearing surface and dry gas is supplied via the through-hole (3a) to the bearing sliding portion,

3. The plain bearing unit according to claim 1 or 2, wherein the bearing portion (2) is a cylindrical bearing made of resin.

4. The plain bearing unit according to at least one of claims 1 to 3, wherein the dry gas is gas containing oxygen.

5. The plain bearing unit according to at least one of claims 1 to 3, wherein the dry gas is gas not containing oxygen.

6. A compressor comprising a plain bearing unit according to claim 1, further comprising;
a compressor portion connected to the rotating and drive shaft (16; 18) of the plain bearing unit to compress fluid;
wherein the gas supply portion (21) supplies dry gas subjected to dust removal.

7. The compressor according to claim 6, wherein the bearing portion has a through-hole (23) passed through from an outer circumferential surface to a bearing surface and the dry gas is supplied via the through-hole (23) to the bearing sliding portion.

8. The compressor according to claim 6 or 7, wherein the bearing portion is a cylindrical bearing made of resin.

9. The compressor according to at least one of claims 6 to 8, wherein the dry gas is gas containing oxygen.

10. The compressor according to at least one of claims 6 to 8, wherein the dry gas is gas not containing oxygen.

## Patentansprüche

1. Gleitlagereinheit mit:
einem Lagerabschnitt (2) aus Thermoplasten, die Glasfaser und/oder Kohlen-stofffaser enthalten und kein festes Schmiermittel enthalten;
einer von dem Lagerabschnitt getragenen Welle (4); und
einem Gasversorgungsabschnitt (3), der einem Lagergleitabschnitt trockenes Gas zuführt, wobei der Lagerabschnitt (2) mit der Welle (4) gleitet und ein Abriebpulver des Lagerabschnitts (2) gleichmäßig auf die Welle (4) als Gegenstück übergeht.

2. Gleitlagereinheit nach Anspruch 1, wobei der Lagerabschnitt (2) ein Durchgangsloch (3a) aufweist, das von einer Außenumfangsfläche zu einer Lagerfläche durchgeht und dem Lagergleitabschnitt trockenes Gas über das Durchgangsloch (3a) zugeführt wird.

3. Gleitlagereinheit nach Anspruch 1 oder 2, wobei der Lagerabschnitt (2) ein zylindrisches Lager aus Kunstharz ist.

4. Gleitlagereinheit nach mindestens einem der Ansprüche 1 bis 3, wobei das trockene Gas Sauerstoff enthaltendes Gas ist.

5. Gleitlagereinheit nach mindestens einem der Ansprüche 1 bis 3, wobei das trockene Gas keinen Sauerstoff enthaltendes Gas ist.

6. Kompressor mit einer Gleitlagereinheit nach Anspruch 1, weiterhin mit:
einem Kompressorabschnitt, der mit der drehenden und Antriebswelle (16; 18) der Gleitlagereinheit zum Komprimieren von Fluid verbunden ist;
wobei der Gasversorgungsabschnitt (21) trockenes Gas in Abhängigkeit von der Staubentfernung zuführt.

7. Kompressor nach Anspruch 6, wobei der Lagerabschnitt ein Durchgangsloch (23) aufweist, das von einer Außenumfangsfläche zu einer Lagerfläche durchgeht und dem Lagergleitabschnitt das trockene Gas über das Durchgangsloch (23) zugeführt wird.

8. Kompressor nach Anspruch 6 oder 7, wobei der Lagerabschnitt ein zylindrisches Lager aus Kunstharz ist.

9. Kompressor nach mindestens einem der Ansprüche 6 bis 8, wobei das trockene Gas Sauerstoff enthaltendes Gas ist.

10. Kompressor nach mindestens einem der Ansprüche 6 bis 8, wobei das trockene Gas keinen Sauerstoff enthaltendes Gas ist.

## Revendications

1. Ensemble de palier lisse comportant :
une partie de palier (2) constituée de thermoplastique contenant de la fibre de verre et/ou une fibre de carbone et ne contenant pas de lubrifiant solide,
un arbre (4) supporté par la partie de palier, et
une partie d'alimentation en gaz (3) délivrant du gaz sec à une partie de coulisse de palier où la partie de palier (2) coulisse avec l'arbre (4) et une poudre d'usure de la partie de palier (2) est transférée de manière uniforme sur l'arbre (4) en contrepartie.

2. Ensemble de palier lisse selon la revendication 1, dans lequel la partie de palier (2) a un trou traversant (3a) qui passe à travers une surface circonférentielle extérieure jusqu'à une surface de palier et un gaz sec est délivré via le trou traversant (3a) à la partie de coulisse de palier.

3. Ensemble de palier lisse selon la revendication 1 ou 2, dans lequel la partie de palier (2) est un palier cylindrique constitué de résine.

4. Ensemble de palier lisse selon au moins l'une des revendications 1 à 3, dans lequel le gaz sec est un gaz contenant de l'oxygène.

5. Ensemble de palier lisse selon au moins l'une des revendications 1 à 3, dans lequel le gaz sec est un gaz ne contenant pas d'oxygène.

6. Compresseur comportant un ensemble de palier lisse selon la revendication 1, comportant en outre :
une partie de compresseur reliée à l'arbre d'entraînement et de rotation (16 ; 18) de l'ensemble palier lisse pour comprimer un fluide,
dans lequel la partie d'alimentation en gaz (21) délivre un gaz sec soumis à un dépoussiérage.

7. Compresseur selon la revendication 6, dans lequel la partie de palier a un trou traversant (23) qui passe à travers une surface circonférentielle extérieure jusqu'à une surface de palier et le gaz de sec est délivré via le trou traversant (3) à la partie de coulisse de palier.

8. Compresseur selon la revendication 6 ou 7, dans lequel la partie de palier est un palier cylindrique constitué de résine.

9. Compresseur selon au moins l'une des revendications 6 à 8, dans lequel le gaz sec est un gaz contenant de l'oxygène.

10. Compresseur selon au moins l'une des revendications 6 à 8, dans lequel le gaz sec est un gaz ne contenant pas d'oxygène.
